**Europäisches Patentamt**

**European Patent Office**

**Office européen des brevets**

(19)

(11) Veröffentlichungsnummer: **0 340 799**

**A1**

(12) ## EUROPÄISCHE PATENTANMELDUNG

(21) Anmeldenummer: 89108193.7

(22) Anmeldetag: 05.05.89

(51) Int. Cl.⁴: **B65D 90/62 , F16K 1/20**

(30) Priorität: 05.05.88 DE 3815389

(43) Veröffentlichungstag der Anmeldung:
08.11.89 Patentblatt 89/45

(84) Benannte Vertragsstaaten:
ES

(71) Anmelder: **Straub, Hartwig**
**Gänsäckerstrasse**
**D-6965 Ahorn-Berolzheim(DE)**

(72) Erfinder: **Straub, Hartwig**
**Gänsäckerstrasse**
**D-6965 Ahorn-Berolzheim(DE)**

(74) Vertreter: **Bardehle, Heinz, Dipl.-Ing. et al**
**Patent- und Rechtsanwälte**
**Bardehle-Pagenberg-Dost-Altenburg-Frohwi-**
**tter-Geissler & Partner Postfach 86 06 20**
**D-8000 München 86(DE)**

(54) **Klappe zum verschliessen eines rohrartigen Auslaufs eines Schüttgutabscheiders.**

(57) Klappe zum Verschließen eines rohrartigen, mit kreisförmiger Öffnung versehenen Auslaufs eines Schüttgutabscheiders, in den das Schüttgut durch Unterdruck im Abscheider gefördert wird, wobei die Klappe neben dem Auslauf auf einer Achse gelagert ist. Die Klapppe ist als Kugeloberfläche geformt und ihre Wölbung taucht in geschlossener Lage in die Öffnung, über deren Rand die Klappe hinausreicht und deren Radius wesentlich größer ist als die Eintauchtiefe der Wölbung in die Öffnung, wobei die Achse der Klappe so angeordnet ist, daß die Wölbung in geöffneter Lage der Klappe vom ausströmenden Schüttgut umspült wird, und die Lagerung der Klappe derart nachgiebig gestaltet ist, daß sich ihre Wölbung in geschlossener Lage der Klappe automatisch gegenüber der Öffnung zentriert.

Fig. 1

EP 0 340 799 A1

## Klappe zum Verschließen eines rohrartigen Auslaufs eines Schüttgutabscheiders

Die Erfindung bezieht sich auf eine Klappe zum Verschließen eines rohrartigen, mit kreisförmiger Öffnung versehenen Auslaufs eines Schüttgutabscheiders, in den das Schüttgut durch Unterdruck im Abscheider gefördert wird.

Eine derartige Klappe ist aus der DE PS 25 05 615 bekannt. Die Klappe besteht hier aus einer ebenen Tafel, die auf einer Achse mit einem Gegengewicht gelagert ist. Die Betätigung der Klappe erfolgt durch einen bei Förderung des Schüttgutes in den Schüttgutabscheider in diesem herrschenden Unterdruck, der die Klappe gegen die Öffnung zieht. Wird dieser Unterdruck abgeschaltet, so öffnet die Klappe unter dem Gewicht des Schüttgutes. Damit sich mit dieser Klappe eine ausreichende Abdichtung der Öffnung des Auslaufs erzielen läßt, ist die Öffnung mit einer besonderen Ringdichtung versehen, gegen die sich die ebene Klappe anlegt. Da die Klappe in ihrer geöffneten Lage etwa unter einem Winkel von 45° in den Bereich unterhalb der Öffnung hineinragt, ergibt sich durch diese Lage der Klappe eine seitliche Auslenkung des aus dem Schüttgutabscheider herausfließendem Schüttguts, was in vielen Fällen unerwünscht ist, insbesondere dann, wenn das Schüttgut möglichst gleichmäßig in einen Auffangbehälter fließen soll.

Es ist weiterhin aus der DE PS 33 02 109 eine Klappe zum Verschließen des Auslaufs eines Schüttgutabscheiders bekannt, die für das Öffnen und Schließen mit einem besonderen Antrieb versehen ist. Die Klappe ist konisch ausgebildet und setzt sich in geschlossener Lage gegen einen die Öffnung des Auslaufs bildenden Gegenkonus. Die Klappe wird dabei in axialer Richtung des Konus hin- und hergeschoben. Diese letztere Anordnung ist relativ aufwendig, insbesondere ergibt sich bei geöffneter Klappe nur ein relativ schmaler Ringspalt um diese, da die konische Klappe in jedem Falle innerhalb des Gegenkonus am Auslauf des Abscheiders verbleibt. Infolgedessen ergibt sich bei geöffneter Klappe ein entsprechend geringer Durchfluß des Schüttguts durch den Ringspalt.

Der Erfindung liegt die Aufgabe zugrunde, eine Klappe gemäß der eingangs erwähnten Gestaltung zu schaffen, die einen einfachen und gedrängten Aufbau aufweist, dabei ohne zusätzlichen Aufwand eine gute Abdichtung der Öffnung des Auslaufs bewirkt und in geöffneter Lage den Schüttgutstrom hinsichtlich seiner Richtung praktisch nicht beeinflußt. Gelöst wird das Problem durch die im Kennzeichen des Anspruchs 1 angegebenen Merkmale.

Aufgrund der Gestaltung der Klappe als Kugeloberfläche ergibt sich zunächst eine besondere Steifigkeit der Klappe, die auf ihre Wölbung zurückgeht. Die Klappe kann daher aus besonders dünnem Material gefertigt werden und besitzt ein entsprechend geringes Gewicht. Die Wölbung erbringt den weiteren Vorteil, daß sich die Klappe automatisch gegenüber der Öffnung zentrieren läßt, in die sich die Kugeloberfläche von selbst einführt. Die Wölbung der Klappe liefert neben der Möglichkeit der Selbstzentrierung auch noch den Vorteil, daß ein Verkanten der Achse der Klappe oder eine winkelmäßige Verlagerung der Klappe gegenüber der Achsrichtung des Auslaufs die Abdichtung der Öffnung nicht beeinflußt, da sich die Kugeloberfläche, wenn sie erst einmal gegenüber der Öffnung zentriert ist, in jeder Lage dichtend an die Öffnung anlegt. Es hat sich darüber hinaus gezeigt, daß besonders zum Zusammenbacken neigende Schüttgüter an der gewölbten Klappe praktisch nicht haften. Dieses Nichthaften wird auch dadurch unterstützt, daß die Wölbung in geöffneter Lage der Klappe vom ausströmenden Schüttgut umspült wird, wodurch eventuell während des Füllprozesses des Schüttgutabscheiders an der Klappe angelegtes Schüttgut von der Klappe wieder abgestreift wird. Dabei ergibt sich der überraschende Effekt, daß trotz des Hineinragens der Wölbung in den Strom des Schüttguts bei geöffneter Lage der Klappe das Schüttgut praktisch nicht abgelenkt wird, es fließt im wesentlichen unter der Wirkung der Schwerkraft senkrecht unterhalb der Öffnung und der Wölbung nach unten, so daß einem vom Schüttgut zu füllenden Behälter gleichmäßig des Schüttgut zugeführt wird.

Um die Selbstzentrierung zu erleichtern, kann man die Achse der Klappe mit Spiel lagern. Hierdurch wird der Klappe mit ihrer Wölbung eine ausreichende Beweglichkeit gegeben, aufgrund deren die Wölbung der Klappe sich automatisch in die Öffnung hineinschiebt.

Es ist auch möglich, die Klappe über einen elastischen Arm auf der Achse zu lagern. In diesem Falle ergibt sich die automatische Zentrierung durch eine Nachgiebigkeit des elastischen Armes, der der Wölbung für das Selbstzentrieren den erforderlichen Spielraum gibt.

Ausführungsbeispiele der Erfindung sind in den Figuren dargestellt. Es zeigen:

Figur 1 einen konischen Auslauf eines Schüttgutabscheiders mit einer Klappe, deren Achslagerung ein Spiel aufweist,

Figur 2 eine zylinderwandförmigen Auslauf eines Schüttgutabscheiders mit einer Klappe, die über eine elastischen Arm auf ihrer Achse gelagert ist.

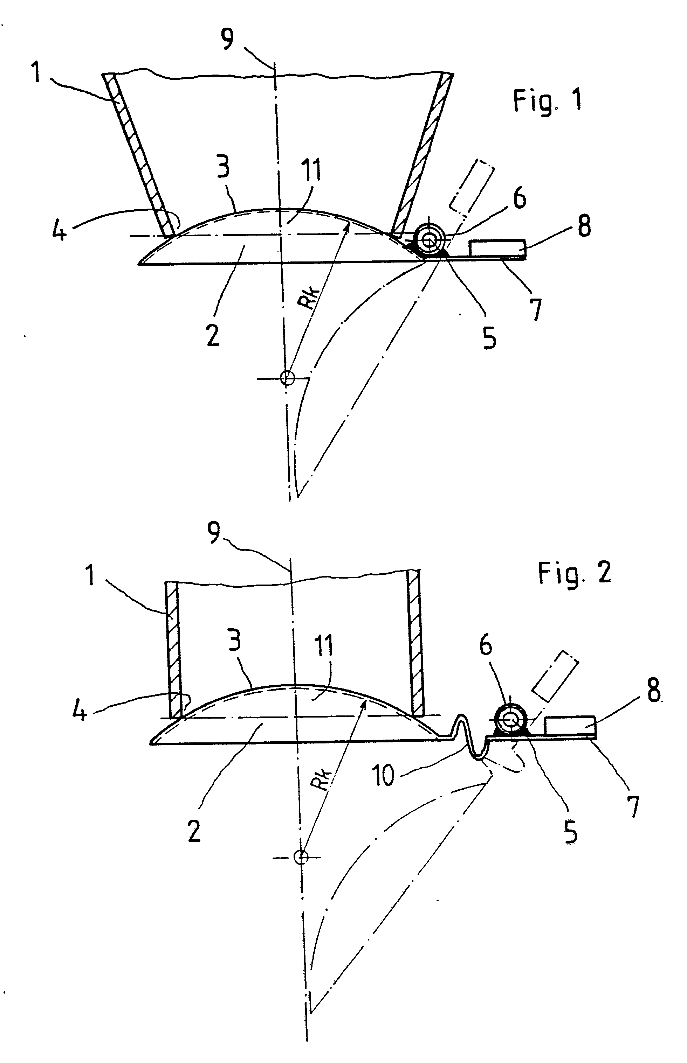

Figur 1 zeigt den Auslauf 1 eines nicht dargestellten Schüttgutabscheiders, der von der Klappe 2 verschlossen wird. Der Auslauf 1 ist hier trichterförmig ausgebildet. Die Klappe 2 ist aus Blech gefertigt und besitzt die Gestalt einer Kugeloberfläche, deren Wölbung 3 um die Eintauchtiefe 11 in die Öffnung 4 des Auslaufs 1 hineinragt. Die Klappe 2 ist auf der stationär angeordneten Achse 5 gelagert, die mit Spiel in der an der Klappe 2 befestigten Lagerbuchse sitzt. Die Klappe 2 setzt sich in dem Arm 7 fort, auf dem das Gegengewicht 8 angebracht ist. Die Klappe 2 ragt etwas über den Rand der Öffnung 4 hinaus. Der Kugelradius Rk der Klappe 2 ist wesentlich größer als die Eintauchtiefe 11.

In der Figur 1 ist durch die strichpunktierte Darstellung die geöffnete Lage der Klappe 2 angedeutet, in der die Klappe 2 bis fast an die durch die Mittellinie 9 dargestellte Achse des Auslaufs 1 heranragt. Infolgedessen umströmt aus dem Auslauf 1 austretendes Schüttgut die Wölbung 3 und streift an der Klappe 2 gegebenenfalls haften gebliebenes Material ab. Die Wölbung 3 sorgt dabei dafür, daß trotz des Hineinragens der Klappe 2 in den Schüttgutstrom dieser im Effekt von seiner senkrechten Richtung praktisch nicht abgelenkt wird und infolgedessen im wesentlichen gleichmäßig in einen unter dem Auslauf 1 befindlichen Behälter hineinfließt.

Die Betätigung der Klappe 2 erfolgt dadurch, daß im Falle von im Schüttgutabscheider und damit im Auslauf 1 herrschenden Unterdruck die Klappe 2 an der Öffnung anliegt, während bei Abschalten des Unterdrucks die Klappe 2 unter dem Gewicht des im Auslauf 1 enthaltenen Schüttguts geöffnet wird.

In der Figur 2 ist eine ähnliche Anordnung dargestellt. Hier ist der Auslauf 1 als zylindrisches Rohr ausgebildet, gegen dessen Öffnung 4 sich die Klappe 2 anlegt. Die Klappe 2 mit ihrer Wölbung 3 ist in gleicher Weise ausgebildet wie die gleichen Bauteile gemäß Figur 1. In die Verbindung zwischen der Klappe 2 und dem Arm 7 ist die aus elastischem Material bestehende Schleife 10 eingebaut, die dafür sorgt, daß sich die Wölbung 3 automatisch gegenüber der Öffnung 4 zentrieren kann. Wenn also die stationäre Achse durch irgendwelche äußeren Einflüsse etwas verschoben ist, so kann dies durch die elastische Schleife 10 ohne weiteres beim Schließen der Klappe 2 ausgeglichen werden. Die kugelige Oberfläche der Klappe 2 sorgt dabei dafür, daß nach erfolgter Zentrierung der Wölbung 3 die Klappe 2 sich auch verkantet gegenüber der Öffnung 4 an diese anlegen kann, ohne daß dabei eine Undichtigkeit entstehen kann.

In der Figur 2 ist wieder in strichpunktmäßiger Darstellung die geöffnete Lage der Klappe 2 gezeigt, in der diese in gleicher Weise wirkt, wie oben anhand der Figur 1 beschrieben.

## Ansprüche

1. Klappe zum Verschließen eines rohrartigen, mit kreisförmiger Öffnung versehenen Auslaufs eines Schüttgutabscheiders, in den das Schüttgut durch Unterdruck im Abscheider gefördert wird, wobei die Klappe neben dem Auslauf auf einer Achse gelagert ist, dadurch gekennzeichnet, daß die Klappe (2) als Kugeloberfläche geformt ist und ihre Wölbung (3) in geschlossener Lage in die Öffnung (4) taucht, über deren Rand die Klappe (2) hinausreicht und deren Radius (Rk) wesentlich größer ist als die Eintauchtiefe (11) der Wölbung (3) in die Öffnung (4), wobei die Achse (5) der Klappe (2) so angeordnet ist, daß die Wölbung (3) in geöffneter Lage der Klappe (2) vom ausströmenden Schüttgut umspült wird, und die Lagerung der Klappe (2) derart nachgiebig gestaltet ist, daß sich ihre Wölbung (3) in geschlossener Lage der Klappe automatisch gegenüber der Öffnung (4) zentriert.

2. Klappe nach Anspruch 1, dadurch gekennzeichnet, daß die Achse (6) der Klappe (2) mit Spiel gelagert ist.

3. Klappe nach Anspruch 1 oder 2, dadurch gekennzeichnet, daß die Klappe (2) über einen elastischen Arm (10) auf der Achse (6) gelagert ist.

STRAUB, Hartwig
St 8972 EP

05.05.1989

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-2 364 904  (PETERS) <br> * Insgesamt * <br> --- | 1 | B 65 D   90/62 <br> F 16 K    1/20 |
| A | FR-A-  981 357  (ETABLISSEMENTS VALLETTE & PAVON) <br> * Insgesamt * <br> --- | 1 | |
| A | FR-A-2 146 056  (INTERNATIONAL STANDARD ELECTRIC CORP.) <br> * Insgesamt * <br> ----- | 2,3 | |

RECHERCHIERTE SACHGEBIETE (Int. Cl.4)

B 65 D
F 16 K
B 01 F

Der vorliegende Recherchenbericht wurde für alle Patentansprüche erstellt

| Recherchenort | Abschlußdatum der Recherche | Prüfer |
|---|---|---|
| DEN HAAG | 01-08-1989 | OSTYN T.J.M. |